# EUROPEAN PATENT SPECIFICATION

(11) **EP 2 499 382 B1**
(45) Date of publication and mention of the grant of the patent: **04.05.2016**
(21) Application number: 10793040.6
(22) Date of filing: 23.09.2010
(51) Int. Cl.: F16B 3/00

(54) **DEVICE FOR BUTT JOINING ELONGATED ELEMENTS**
VORRICHTUNG ZUR STOSSVERBINDUNG LÄNGLICHER ELEMENTE
DISPOSITIF SERVANT À JOINDRE BOUT À BOUT DES ÉLÉMENTS ALLONGÉS

(30) Priority: 11.11.2009 IT MI20091974
(43) Date of publication of application: 19.09.2012
(73) Proprietor: SMS Innse S.p.A., 20097 San Donato Milanese (MI) (IT)
(72) Inventor: ROSSI, Antonino, I-20064 Gorgonzola (MI) (IT)
(74) Representative: Belloni, Giancarlo
(86) International application number: PCT/IB2010/054288
(87) International publication number: WO 2011/058451

(56) References cited:
- DE-C1- 4 101 561

## Description

The present invention relates to a device for butt joining elongated elements and in particular relates to an elastically contracting device able to forming a butt or end-to-end joint for solid elongated elements or long parts, such as the mandrels used during rolling of seamless tubes. The invention also relates to a method for butt joining elongated elements.

In the heavy mechanical engineering sector it is often required to butt join sections of solid long parts, while ensuring as far as possible the continuity of the mechanical properties.

This requirement is particularly important in the sector of mandrel rolling of seamless tubes. During this processing, a mandrel is arranged inside the tubular semifinished article during rolling. It is often required to assemble the mandrel together with an extension. The assembly consisting of the mandrel and the extension, as well as the joint itself, must ensure suitable mechanical properties. The mandrel is usually subject to a radial compressive and axial tensile stress. The joint between the mandrel and the extension must in any case be able to transmit the axial tensile stress.

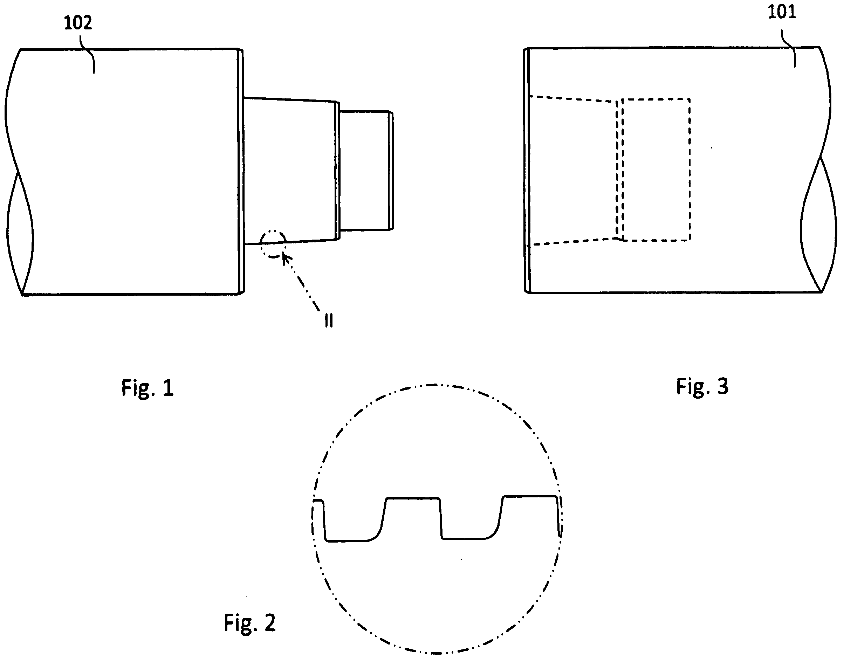

At present these joints are obtained by means of a screw/female thread connection. According to this solution, the end of a long part (for example the extension) is machined so as to obtain an externally threaded section, while the end of the other long part (for example the mandrel) is machined so as to obtain an internally threaded blind hole. In order to satisfy the requirements in terms of mechanical properties, the thread must be slightly conical and must have a very particular asymmetrical form. These configurations of the ends of the two long parts and the profile of the thread are schematically shown in Figures 1 to 3.

This type of butt joint, although widely used, is however not without of drawbacks. Firstly the above mentioned machining operations to be carried out on the ends of the two long parts require a high degree of precision in order to ensure the very small tolerances which are necessary. Obviously these precision-machining operations have a high cost, in particular if, as in the case in question, they must be carried out on large-size parts such as mandrels and their extensions.

Moreover, during the entire working life of the mandrel, the routine operations of screwing and unscrewing the two long parts must be carried out using specific machinery. It should remembered in fact that standard tube-rolling mandrels have a weight usually ranging between 18 and 20 tonnes. It is therefore required to use a special machine, i.e. a so-called "mandrel screwing machine", designed specifically to carry out these operations. In particular the mandrel screwing machine, in addition to moving the two long parts and arranging them alongside each other with a sufficient degree of precision, must be able to generate a tightening torque and to adjust its value. The same mandrel screwing machine, which is used to join together the two long parts, must also be used for the reverse operations in order to separate them. This machinery obviously involves costs associated with the initial investment, the logistics of the plant and ordinary running thereof.

DE 4101561 C1 discloses a flange connection for connecting two shift flanges, especially in motor vehicle drives.

The object of the present invention is therefore to overcome at least partly the drawbacks mentioned above with reference to the prior art.

In particular, a task of the present invention is to provide a device for butt joining long parts, which is able to limit the investment, logistics and running costs.

Moreover, a task of the present invention is to provide a system for butt joining long parts, which allows optimum mechanical properties to be maintained.

The abovementioned object and tasks are achieved by a device for butt joining long parts according to that claimed in Claim 1 and by the associated method according to that claimed in Claim 15.

The characteristic features and further advantages of the invention will emerge from the description provided hereinbelow, of a number of examples of embodiment, provided by way of a non-limiting example, with reference to the accompanying drawings in which:
- Figure 1 shows a schematic side view of the end of a first long part machined according to the prior art;
- Figure 2 shows the detail indicated by II in Figure 1;
- Figure 3 shows a schematic side view of the end of a second long part machined according to the prior art;
- Figure 4 shows a schematic perspective view of the end of a first long part machined according to the invention;
- Figure 5 shows a schematic perspective view of the end of a second long part machined according to the invention;
- Figure 6 shows a schematic perspective view of a joining device according to the invention;
- Figure 7 shows a schematic perspective view of the ends of a first and second long part arranged together according to the invention;
- Figure 8 shows a schematic perspective view of the butt joint between a first and second long part according to the invention;
- Figure 9 shows a side view of the ends of a first and second long part arranged together according to the invention;
- Figure 10 shows a side view of a joining device according to the invention;
- Figure 11 shows a side view of the butt joint between a first and second long part according to the invention;
- Figure 12 shows a partially sectioned side view of two long parts butt joined by means of a device according to the invention;
- Figure 13 shows the detail indicated by XIII in Figure 11;
- Figure 14 shows a possible variant of the detail of Figure 13;
- Figure 15 schematically shows an axial cross-section of the detail indicated by XV in Figure 11;
- Figure 16 shows a view, similar to that of Figure 12, in which the long parts are butt joined by means of another device according to the invention;
- Figure 17 shows a side view of a further device according to the invention;
- Figure 18 is an exploded side view of the device according to Figure 17;
- Figure 19 shows an axial view of a component of the device according to Figure 18;
- Figure 20 shows a cross-sectional view along the line XX-XX of Figure 19.

With reference to the accompanying figures, 100 denotes a device for butt joining long parts 101 and 102 having a common axis X. The device 100 comprises:
- a body 20 which extends along an axis x, the body 20 being hollow so as to define an axial cavity 30 having a side wall 33, a first end face 31 and a second end face 32;
- a first enlarged portion 21 situated at a first end of the body 20, the first enlarged portion 21 defining a first bottom abutment 23 and a first top abutment 25;
- a second enlarged portion 22 situated at a second end of the body 20, the second enlarged portion 22 defining a second bottom abutment 24 and a second top abutment 26;
- at least one piston 40 comprising a front surface 41 and a stem 42, the piston being housed inside the axial cavity 30 so as to define inside the axial cavity 30 a chamber 50 able to be pressurized and the stem 42 resting against one of the end faces 31 or 32 of the axial cavity 30; and
- means 52 for introducing/removing a pressurized fluid into/from inside the chamber 50.

The terms "bottom" and "top" are used here and below, for example to identify the abutments defined by the enlarged portions, with reference to the accompanying figures. These definitions have been chosen arbitrarily for the sake of illustrational clarity, but different or opposite definitions could also be equally well used.

In connection with the present description, the expression "long part" is understood as meaning a mechanical element which has an extension in one direction markedly greater than its extension in the perpendicular directions. The long parts to which the present invention refers preferably have a cylindrical or prismatic shape, but other shapes are not excluded a priori. Finally, the long parts considered here are solid in the end zones, adjacent to the ends to be joined together. This, however, does not exclude the possibility of the remainder of these elements being lightened or hollow.

In accordance with one embodiment, the body 20 of the device 100 has a cylindrical shape, preferably with a circular cross-section. Similarly, the axial cavity 30 preferably has a cylindrical shape, even more preferably with a circular cross-section. As the person skilled in the art can easily understand, the at least one piston 40 must have a shape matching that of the axial cavity 30 so as to be able to be housed therein and define the chamber 50 suitable for being pressurized. The case where both the axial cavity 30 and the piston 40 have a circular cross-section is the case in which it is easiest, in a manner known per se, obtaining an effective fluid-tight seal between the piston 40 and the side wall 33 of the axial cavity 30. This sealing effect may be obtained, for example, by means of proper seals and elastic rings 43.

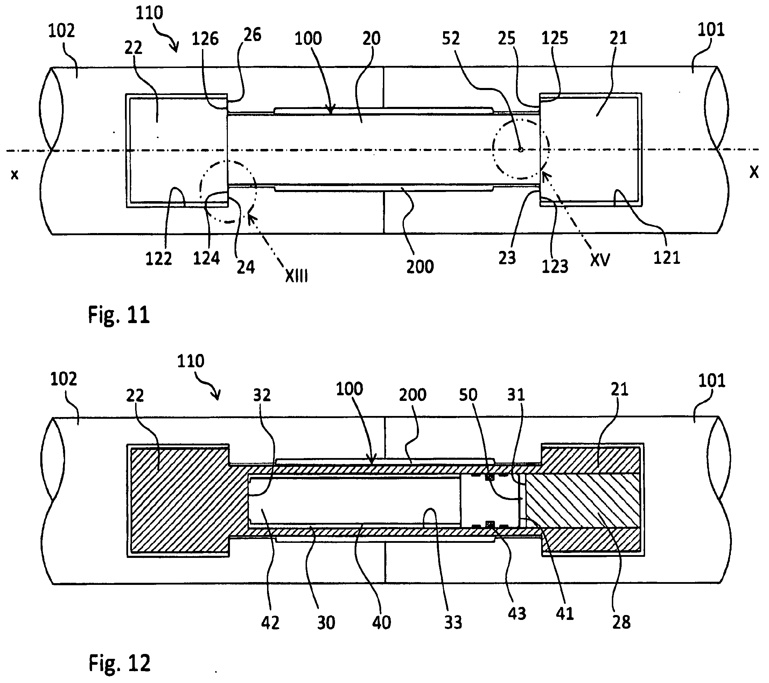

In some embodiments, for example those shown in Figure 12, the device 100 comprises a single piston 40. In this case the chamber 50 is defined axially by the front surface 41 of the piston 40 and by the first end face 31.

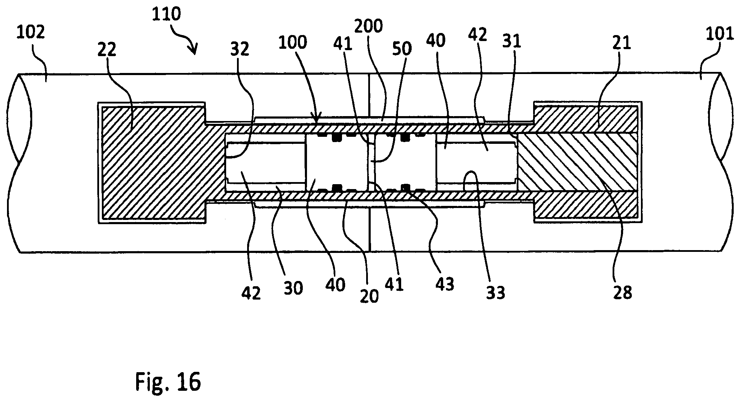

In other embodiments, for example that shown in Figure 16, the device 100 comprises two pistons 40 arranged opposite each other. In this case the chamber 50 is defined axially by the two opposite front surfaces 41 of the pistons 40.

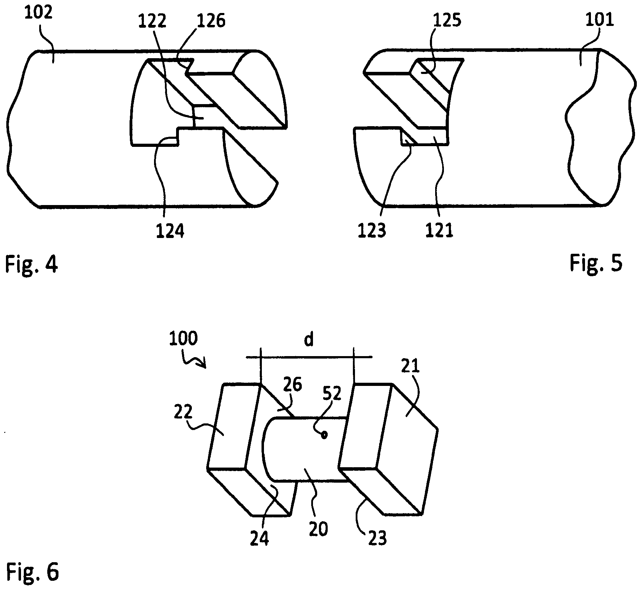

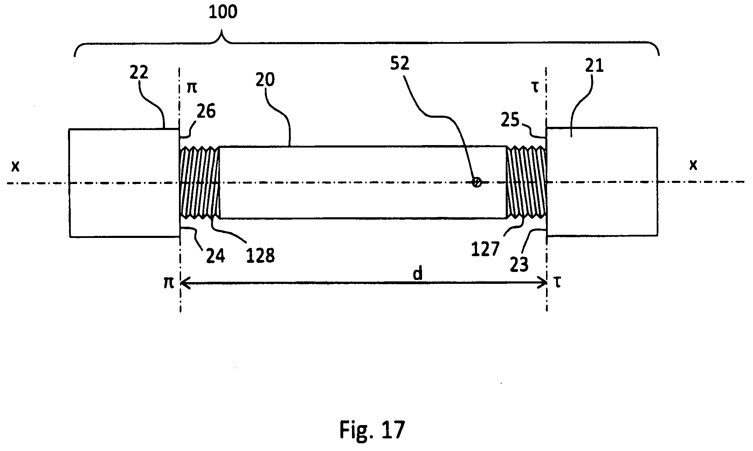

In some embodiments, the device 100 has an integral structure where the body 20 and the enlarged portions 21 and 22 are formed as one piece. See, for example, Figures 6, 8,10-12 and 16. In other embodiments, the device 100 has instead a composite structure in which the enlarged portions 21 and 22 are movable axially with respect to the body 20. See, for example, Figures 17 to 20.

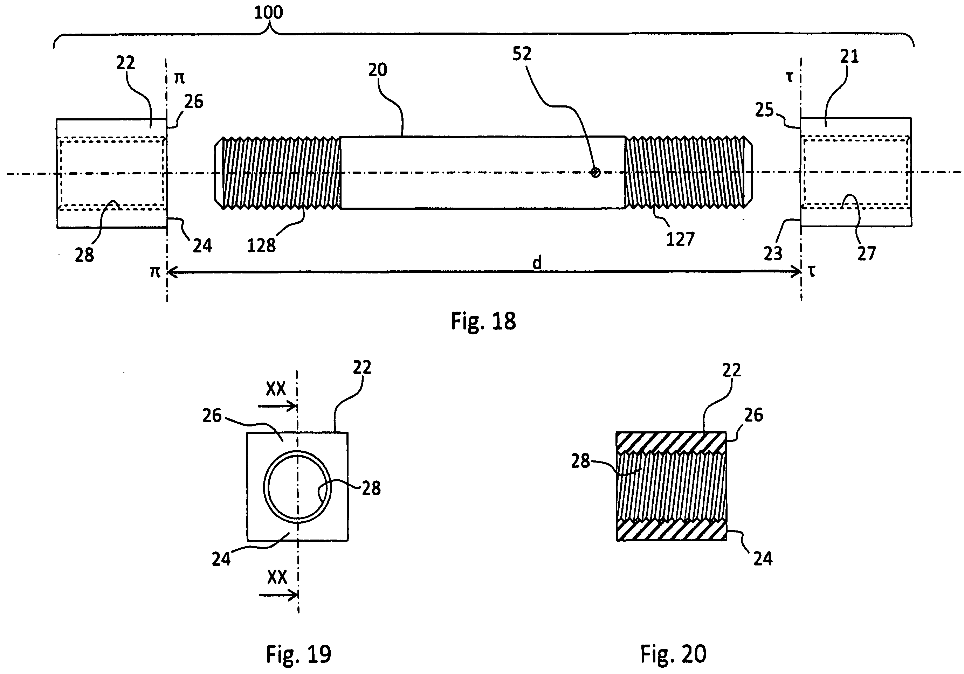

In the composite embodiments, the relative mobility in the axial direction of the body 20 and the enlarged portions 21 and 22 is preferably achieved by means of threaded connections. As schematically shown in Figures 17 and 18, the body 20 advantageously comprises cylindrical ends on which a first thread 127 and a second thread 128 are formed, said threads having a direction or "handedness" opposite to each other. In other words, if the first thread 127 is right-handed, the second thread 128 is left-handed, or vice versa. Similarly, the first enlarged portion 21 comprises a first hole 27 threaded so as to be compatible with the first thread 127 and the second enlarged portion 22 comprises a second hole 28 threaded so as to be compatible with the second thread 128. As a result of this structure, the same rotation of the body 20 with respect to the enlarged portions 21 and 22 imparts to the latter two axial movements which are opposite to each other.

In accordance with the embodiments shown in the accompanying figures, whether the parts be integral or composite, the body 20 is made as a single solid piece and then the axial cavity 30 is obtained by means of removal of material. Once the axial cavity 30 has been formed inside the body 20, the piston 40 (in the case of Figure 12) or the two opposite pistons (in the case of Figure 16) is/are introduced and the axial cavity 30 is then closed by means of a plug 28. In this embodiment, the plug 28 also defines the first end face 31 of the axial cavity 30.

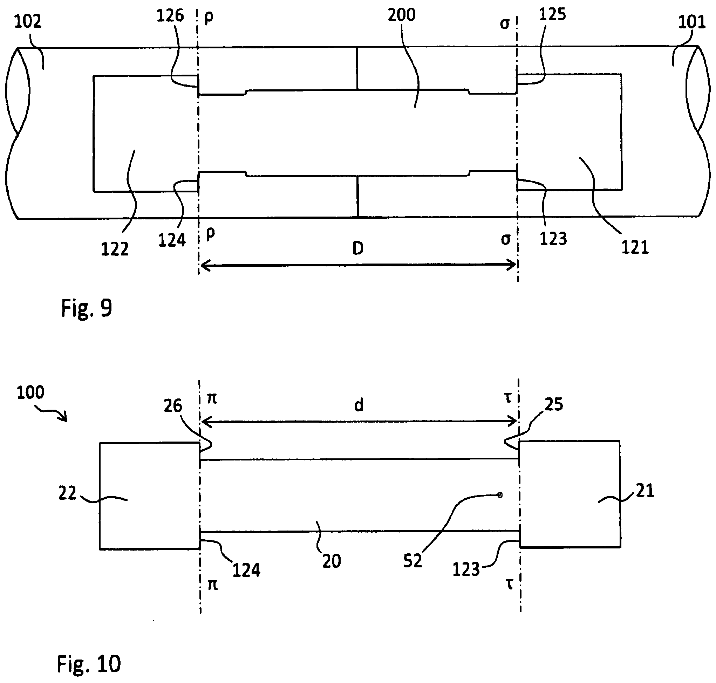

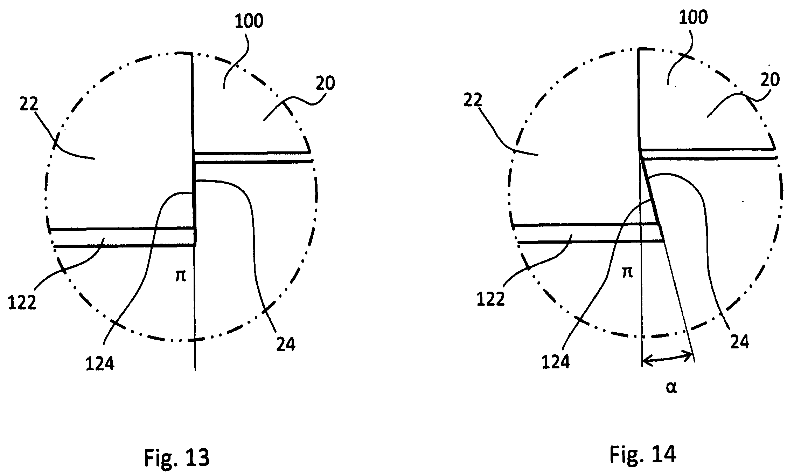

In accordance with the embodiments of the invention shown in the accompanying Figures 6, 8, 10-12, 16-18 and schematically in the detail of Figure 13, the second abutments 24 and 26 are parallel to each other and preferably lie in a single plane π. The second abutments 24 and 26 as well as the plane π are substantially perpendicular to the axis x of the body 20. Similarly, the first abutments 23 and 25 are parallel to each other and preferably lie in a single plane τ. The first abutments 23 and 25 as well as the plane τ are also substantially perpendicular with respect to the axis x of the body 20. Figures 6, 10 and 17-18 schematically illustrate the distance d which separates the two planes π and τ. In the single-piece embodiments (Figures 6 and 10) of the device 100 the distance d is fixed, while in the composite embodiments (Figures 17 and 18) of the device 100 the distance d is adjustable.

According to the embodiment of the invention schematically shown in the detail of Figure 14, the second bottom abutment 24 is instead inclined, so as to form an angle α with respect to π. If the angle α thus shown in Figure 14 is considered to be positive, the second top abutment 26 forms with π an angle -α, i.e. of the same amplitude, but with an opposite sign. Similarly the bottom abutment 23 forms with π an angle -α, while the first top abutment 25 forms with π an angle α.

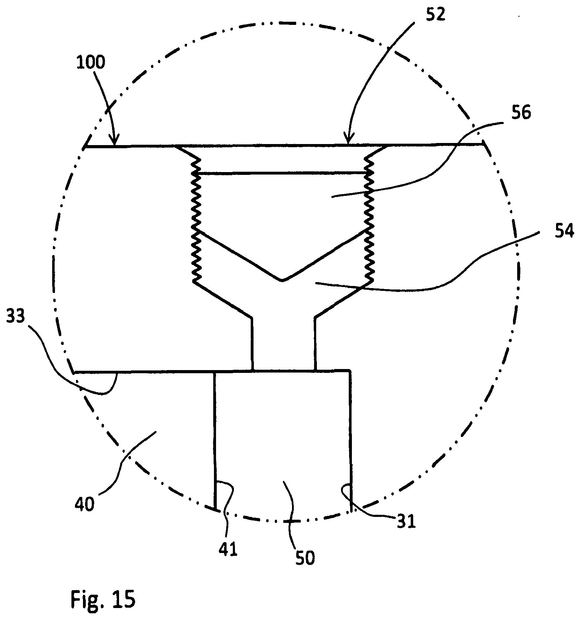

According to the embodiment shown in Figure 15, the means 52 for introducing/removing a pressurized fluid inside the chamber 50 comprise an auxiliary chamber 54, the volume of which may be varied by adjusting, for example, a screw 56 able to move inside the auxiliary chamber 54.

According to another embodiment (not shown) the means 52 comprise a channel which connects the chamber 50 with the exterior and a valve which causes opening and closing of the channel. The valve may be preferably of the type which allows rapid coupling to a pressurized-fluid circuit of the known type.

The invention also relates to the assembly 110 comprising the device 100 described above and the two long parts 101 and 102 butt joined. These long parts must be prepared, for example by means of milling, in the manner shown schematically in Figures 4 and 5. In particular, considering for example the first long part 101, a milling operation must be performed so as to create a half-recess 121 suitable for insertion of the first enlarged portion 21 with wide axial clearance. The half-recess 121 defines a first bottom contact surface 123 and a first top contact surface 125 intended to come into contact with the first bottom abutment 23 and with the first top abutment 25, respectively. In a similar manner, in the second long part 102 a half-recess 122 is formed, said half-recess being suitable for insertion of the second enlarged portion 22 with wide axial clearance. The half-recess 122 defines a second bottom contact surface 124 and a second top contact surface 126 intended to come into contact with the second bottom abutment 24 and with the second top abutment 26, respectively.

In accordance with the embodiment of the invention shown in the accompanying Figures 4-5, 7-9, 11-12 and 16 and schematically in the detail of Figure 13, the second contact surfaces 124 and 126 are parallel to each other and lie preferably on a single plane ρ. The plane ρ is substantially perpendicular to the axis X of the long parts 101 and 102. Similarly, the first contact surfaces 123 and 125 are parallel to each other and lie preferably on a single plane σ. The plane σ is parallel to ρ and substantially perpendicular to the axis X of the long parts.

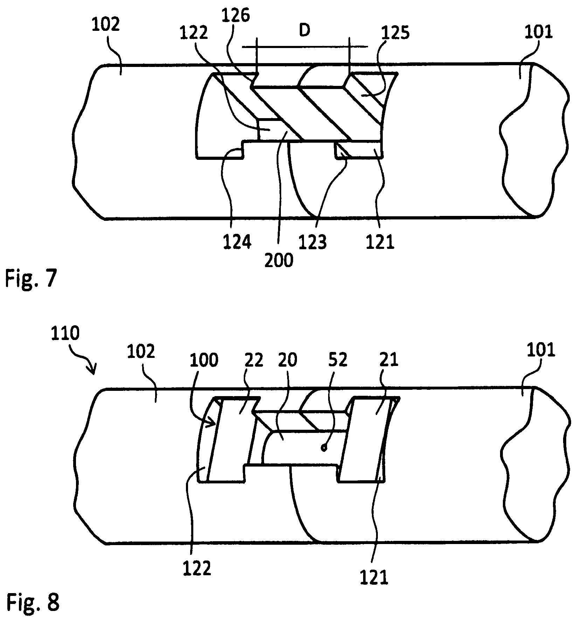

Figures 7 and 9 illustrate schematically the distance D which separates the two planes ρ and σ.

According to the embodiment of the invention schematically shown in the detail of Figure 14, the second bottom contact surface 124 is instead inclined, so as to form an angle α with respect to ρ. If the angle α as shown in Figure 14 is considered to be positive, the second top contact surface 126 forms with ρ an angle -α, i.e. of the same amplitude, but with an opposite sign. Similarly the first bottom contact surface 123 forms with ρ an angle -α, while the first top contact surface 125 forms with ρ an angle α.

In order to butt join the two long parts 101 and 102, they are arranged next to each other so as to have a common axis X, as schematically shown in Figures 7 and 9. In this configuration, the two half-recesses 121 and 122 arranged next to each other form a single recess which has an overall shape similar to that of the device 100. In particular in the adjacent configuration of the two long parts 101 and 102, the distance between the plane ρ and the plane σ is equal to D.

With reference to the single-piece embodiments of the device 100 (for example those shown in Figures 6, 8, 10-12 and 16), the distance D between ρ and σ is slightly greater than the distance d between π and τ This relation between D and d does not allow insertion of the device 100 inside the recess 200. Insertion of the device 100 inside the recess 200 is possible only by means of introduction of the pressurized fluid inside the chamber 50.

According to the embodiments with a single piston 40 (see, for example, Figure 12), the pressure which acts inside the chamber 50 creates a force on the front surface 41 of the piston 40 and on the first end face 31 of the axial cavity 30. The force which acts on the piston 40 is transmitted to the second end face 32 via the stem 42.

According to the embodiments with two pistons 40 (see, for example, Figure 16), the pressure which acts inside the chamber 50 creates a force on both the front surfaces 41 of the pistons 40. The force which acts on the pistons 40 is transmitted onto the first end face 31 and onto the second end face 32 via the stems 42. An advantage of the embodiment with the double piston 40 is that the stems 42 have an unsupported or free flexing length which is significantly smaller (about half) that of the stem of a single piston 40. Owing to the smaller free flexing length, each of the two stems offers a greater resistance to buckling instability. For this reason the two stems 42 may be slimmer and therefore overall lighter than the stem of a single piston 40.

The end result of application of the pressure inside the chamber 50 is therefore that of inducing a tensile stress state in the body 20 of the device 100. In accordance with the invention, the elastic elongation deformation of the body 20, due to the tensile state, allows the distance d between the planes π and τ to increase until it exceeds D in value. In the deformed condition it is therefore possible to insert the device 100 inside the recess 200. During insertion, the abutments 23, 25, 24, 26 defined by the enlarged portions 21 and 22 of the device 100 slide along the contact surfaces 123, 125, 124, 126 defined inside the half-recesses 121 and 122 of the long parts 101 and 102. When the axis x of the device 100 coincides with the common axis X of the two long parts 101 and 102, it is possible to act on the means 52 so as to reduce the pressure inside the chamber 50 to a value close to atmospheric pressure. The reduction in pressure inside the chamber 50 causes a reduction in the tensile state of the body 20 and therefore the elastic return movement due to the lack of stress. The elastic return causes renewed contraction of the body 20 so that the distance d between the planes π and τ is reduced again. Following said contraction, the abutments defined by the enlarged portions 21 and 22 of the device 100 come into axial contact with the contact surfaces defined in the half-recesses 121 and 122 of the long parts 101 and 102. The reduction of the pressure inside the chamber 50 to a value close to or equal to atmospheric pressure can no longer cause the elastic return of the body 20 to the undeformed state which it had prior to insertion inside the recess 200. In fact the new geometrical constraints force a tensile state to remain inside the body 20 and, at the same time, create a compressive state in the ends of the long parts 101 and 102 which bear against each other.

With reference to the composite embodiments of the device 100 (for example those shown in Figures 17 to 20) and as already described above, the distance d between the plane π and τ is adjustable. In accordance with this embodiment, in order to insert the device 100 inside the recess 200 it is required to adjust the distance d so that it is only slightly greater than D. During insertion, the abutments defined by the enlarged portions 21 and 22 of the device 100 slide along the contact surfaces defined in the half-recesses 121 and 122 of the long parts 101 and 102. When the axis x of the device 100 coincides with the common axis X of the two long parts 101 and 102, it is possible to reduce the distance d until the abutments 24, 26 and 23, 25 come into contact with the respective contact surfaces 124, 126 and 123, 125. In accordance with the embodiment shown, the distance d may be reduced by suitably rotating the body 20 about its axis x. The two oppositely directed threads 127 and 128 thus cause the two enlarged portions 21 and 22 to move towards each other. When the abutments 24, 26 and 23, 25 make contact with the respective contact surfaces 124, 126 and 123, 125, the device 100 is regulated so that d is substantially equal to D. At this point it is possible to act on the means 52 so as to reduce the pressure inside the chamber 50 to a value close to atmospheric pressure. The reduction in pressure inside the chamber 50 causes a reduction in the tensile state of the body 20 and therefore the elastic return due to the absence of the stress. The elastic return causes contraction of the body 20 such that the distance d between the planes π and τ tends to decrease, no longer owing to a relative rotation of the body 20 and the enlarged portions 21 and 22, but owing to an axial contraction of the body 20 itself. Following this contraction, a tensile state is generated in the body 20 and, at the same time, a compressive state is generated in the ends of the long parts 101 and 102 which bear against each other.

Moreover, in some embodiments of the composite device 100, the cavity 30 extends axially until it concerns the ends of the body 20 where the threads 127 and 128 are formed. Moreover, the threads 127 and 128 are preferably formed on the body 20 with the chamber 50 under pressure and the body 20 in the deformed state. According to these embodiments, if the body 20 were to be free of external geometrical constraints, the reduction in the pressure inside the chamber 50 and the consequent axial contraction of the body 20 would result in a variation in the pitch of the threads 127 and 128 formed on it. On the other hand, the threads of the holes 27 and 28 formed in the enlarged portions 21 and 22 are not influenced in any way by the value of the pressure inside the chamber 50.

In accordance with these embodiments, once the enlarged portions 21 and 22 have been screwed onto the body 20, removal of the pressure from the chamber 50 causes locking of the enlarged portions on the body 20 owing to the relative variation between the pitch of the threads 127 and 128 and the pitch of the threads inside the holes 27 and 28. The body 20 and the enlarged portions 21 and 22 thus behave in practice as a single-piece device 100.

The person skilled in the art will understand immediately that the threaded connection according to the invention does not have the disadvantages of the threaded connection described above with reference to the prior art. During use of the device 100 according to the invention which envisages the threaded connection between the body 20 and the enlarged portions 21 and 22, it is not required to apply a tightening torque such as to ensure the butt joint between the two long parts 101 and 102. On the contrary, during use of the device 100 according to the invention, the body 20 must be rotated only until the abutments 24, 26, 23 and 25 come into contact with the respective contact surfaces 124, 126, 123 and 125. This rotation is substantially unimpeded, being opposed only by the friction which is generated between the threads and therefore does not involve the application of high torques. The force for locking together the two long parts 101 and 102 is instead provided by the axial contraction of the body 20.

The device 100 in its composite embodiment also, in the same way as for the single-piece embodiment, may comprise a single piston 40 or two oppositely arranged pistons 40. A specific advantage of the dual-piston solution is that, similar to that shown in Figure 16, the chamber 50 may be formed in the vicinity of the half-way point along the axial length of the body 20. In this way, the means 52 for introducing/removing pressurized fluid into/from the chamber 50 may also be situated close to the mid-point of the body 20, without interfering therefore with the threads 127 or 128.

Obviously, there is no difference, both for the single-piece embodiment and for the composite embodiment, in connection with what described above, if the contact surfaces and the abutments are not perpendicular to the axis X, but form instead an angle α as described above. In this case, the stresses induced by inclination of the abutments and the contact surfaces have a self-centring effect on the joint between the two long parts 101 and 102.

The method for butt joining two long parts 101 and 102 according to the invention is briefly described below. The method envisages the steps of:
- providing a device 100 as described above;
- providing in the first long part 101 a half-recess 121 suitable for containing the first enlarged portion 21 of the device 100 and for defining a first bottom contact surface 123 and a first top contact surface 125 intended to come into contact, respectively, with the first bottom abutment 23 and with the first top abutment 25 defined by the first enlarged portion 21;

- providing in the second long part 102 a half-recess 122 suitable for containing the second enlarged portion 22 of the device 100 and for defining a second bottom contact surface 124 and a second top contact surface 126 intended to come into contact, respectively, with the second bottom contact surface 24 and with the second top contact surface 26 defined by the second enlarged portion 22;
- arranging the two long parts 101 and 102 end-to-end so that they have a common axis X and so that the two half-recesses 121 and 122 form a single recess 200;
- introducing pressurized fluid inside the chamber 50 of the device 100;
- inserting the device 100 inside the recess 200;
- reducing pressure inside the chamber 50.

In the case where the device 100 is of the single-piece type, the steps described above are sufficient to achieve the butt connection of the two long parts 101 and 102.

In the case where the device is of the composite type, after the step of inserting the device 100 inside the recess 200, it is required to perform the further step of adjusting the distance d so that it is substantially equal to D. This step may then be followed by the step of reducing the pressure inside the chamber 50.

In the case considered by way of example, the device and the method according to the invention are used for butt joining long parts which are subjected to an axial tension. The extension and the respective mandrel of a rolling mill are in fact subject to a tensile force during the rolling of seamless tubes. In this case the compressive state, which is induced in the ends of the two long parts 101 and 102 by the elastic return movement of the device 100, must be calculated so as not to be cancelled out by the tensile force which arises during rolling. The presence - albeit to a minimum degree - of the compressive state ensures in fact the continuity of the mechanical properties in the two long parts.

As the person skilled in the art may note, the present device 100 according to the invention and the respective connection method represent an evolution of the known mechanical connection known as a "shrink link" joint. In this known connection, the expansion needed to introduce the device inside the recess is obtained by heating the part. The subsequent contraction due to cooling of the part causes the two parts to be joined together. This connection method, although widely used because of its solid and robust action, has the disadvantage that it is definitive. Once the part has cooled, in fact, it is usually not possible to remove it without destroying it. It is in fact not possible to induce selectively renewed thermal expansion in the connection device alone, without at the same time deforming as a result of the heat also the surrounding parts. The present invention is based on this technique and constitutes a substantial evolution thereof in terms of the possibility of being able to remove the connection.

The present invention also constitutes a substantial improvement of the butt joining of long parts performed by means of threaded connections of the known screw/female thread type.

The present invention in fact has a cost which is considerably less than that of the known solution. In terms of the mechanical machining operations, it is not required to ensure particularly small tolerances, except for the relative proportions of d and D if the device 100 of the single-piece type is used. This therefore means that the device 100 and the half-recesses 121 and 122 may be made by means of standard low-cost machining operations.

Moreover, once the device 100 has been made and the long parts 101 and 102 prepared as described above, the ordinary connection and disconnection operations require solely the use of a pressurized fluid, such as oil, which is commonly available in industrial plants without the need for a specific outlay.

Lastly, the use of the device 100 according to the invention means that so-called "mandrel screwing machinery" may be dispensed with.

With regard to the embodiments of the butt joining device for long parts described above, the person skilled in the art may, in order to satisfy specific requirements, make modifications to and/or replace elements described with equivalent elements, without thereby departing from the scope of the accompanying claims.

## Claims

1. Device (100) for butt joining two long parts (101 and 102) having a common axis X, comprising:
- a body (20) which extends along an axis x; the body (20) being hollow so as to define an axial cavity (30) having a side wall (33), a first end face (31) and a second end face (32);
- a first enlarged portion (21) situated at a first end of the body (20), the first enlarged portion (21) defining a first bottom abutment (23) and a first top abutment (25);
- a second enlarged portion (22) situated at a second end of the body (20), the second enlarged portion (22) defining a second bottom abutment (24) and a second top abutment (26);
- at least one piston (40) comprising a front surface (41) and a stem (42), the piston (40) being housed inside the axial cavity (30) so as to define inside the axial cavity (30) a chamber (50) suitable for being pressurized and the stem (42) making contact against an end face (31, 32) of the axial cavity (30); and
- means (52) for introducing/removing a pressurized fluid into/from inside the chamber (50).

2. Device (100) according to Claim 1, wherein the axial cavity (30) has a cylindrical shape and the at least one piston (40) has a shape matching that of the axial cavity (30) and comprises seals and elastic rings (43) able to achieve an effective fluid-tight seal between the piston (40) and the side wall (33) of the axial cavity (30).

3. Device (100) according to any one of the preceding claims, comprising two pistons (40) arranged opposite each other.

4. Device (100) according to any one of the preceding claims, wherein the first abutments (23, 25) lie in a single plane τ substantially perpendicular to the axis x of the body (20) and the second abutments (24, 26) lie in a single plane π substantially parallel to τ and perpendicular to the axis x of the body (20).

5. Device (100) according to any one of Claims 1 to 3, wherein the first top abutment (25) and the second bottom abutment (24) form an angle α with respect to the plane π perpendicular to the axis x of the body (20), while the first bottom abutment (23) and the second top abutment (26) form an angle -α with respect to the plane π.

6. Device (100) according to any one of the preceding claims, wherein the means (52) for introducing/removing a pressurized fluid into/from the chamber (50) comprise an auxiliary chamber (54), the volume of which may be varied by operating a screw (56) able to move inside the auxiliary chamber (54).

7. Device (100) according to any one of Claims 1 to 5, wherein the means (52) for introducing/removing a pressurized fluid comprise a channel which connects the chamber (50) with the exterior and a valve which causes opening and closing of the channel, the valve being of the type which allows fast coupling with a pressurized fluid circuit of the known type.

8. Device (100) according to any one of preceding claims, having an integral structure in which the body (20) and the enlarged portions (21, 22) are made as one piece.

9. Device (100) according to any one of Claims 1 to 7, having a composite structure, i.e. a structure in which the enlarged portions (21, 22) are axially movable with respect to the body (20).

10. Assembly (110) comprising a device (100) according to any one of the preceding claims, a first long part (101) and a second long part (102) having a common axis X, wherein:
- the axis x coincides with the axis X;
- a half-recess (121) suitable for inserting the first enlarged portion (21) with wide axial clearance is formed in the first long part (101), the half-recess (121) defining a first bottom contact surface (123) and a first top contact surface (125) intended to come into contact with the first bottom abutment (23) and with the first top abutment (25), respectively; and
- a half-recess (122) suitable for inserting the second enlarged portion (22) with wide axial clearance is formed in the second long part (102), the half-recess (122) defining a second bottom contact surface (124) and a second top contact surface (126) intended to come into contact with the second bottom abutment (24) and with the second top abutment (26), respectively.

11. Assembly (110) according to the preceding claim, wherein the first contact surfaces (123, 125) lie in a single plane σ substantially perpendicular to the axis X and the second contact surfaces (124, 126) lie in a single plane ρ substantially parallel to σ and perpendicular to the axis X.

12. Assembly (110) according to Claim 10, wherein the first top contact surface (125) and the second bottom contact surface (124) form an angle α with respect to the plane ρ perpendicular to the axis X, while the first bottom contact surface (123) and the second top contact surface (126) form an angle -α with respect to ρ.

13. Assembly (110) according to Claim 10, wherein the two half-recesses (121, 122) arranged next to each other form a single recess (200) having an overall shape similar to that of the device (100) and wherein the device (100) may be inserted inside the recess (200) solely by the introduction of pressurized fluid inside the chamber (50).

14. Assembly (110) according to Claim 11, comprising a device (11) according to Claim 4, wherein:
- the two planes π and τ are situated at a distance d;
- the two planes ρ and σ are situated at a distance D; and
- when there is no pressurized fluid inside the chamber (50), D is slightly greater than d.

15. Method for butt joining a first long part (101) and a second long part (102) having a common axis X, comprising the steps of:
- providing a device (100) according to Claim 1,
- providing in the first long part (101) a half-recess (121) suitable for containing the first enlarged portion (21) of the device (100) and for defining a first bottom contact surface (123) and a first top contact surface (125) intended to come into contact with the first bottom abutment (23) and with the first top abutment (25), respectively, defined by the second enlarged portion (21);
- providing in the second long part (102) a half-recess (122) suitable for containing the second enlarged portion (22) of the device (100) and for defining a second bottom contact surface (124) and a second top contact surface (126) intended to come into contact with the second bottom abutment (24) and with the second top abutment (26), respectively;
- arranging the two long parts (101, 102) end-to-end so that they have a common axis X and so that the two half-recesses (121,122) form a single recess (200);
- introducing pressurized fluid inside the chamber (50) of the device (100);
- inserting the device (100) inside the recess (200).
- reducing the pressure inside the chamber (50).

16. Method according to the preceding claim, wherein:
- the step of providing a device (100) according to Claim 1 comprises the step of providing a device (100) according to Claim 9; and
- also comprises, after the step of inserting the device (100) inside the recess (200), the step of adjusting the distance d between the first abutments (23, 25) and the second abutments (24, 26) so that it is substantially equal to the distance D between the first contact surfaces (123, 125) and the second contact surfaces (124, 126).

## Patentansprüche

1. Vorrichtung (100) zur Stoßverbindung zweier länglicher Teile (101, und 102) mit einer gemeinsamen Achse X bestehend aus:
- einem Körper (20), der sich entlang einer Achse x erstreckt; wobei der Körper (20) hohl ist, um einen axialen Hohlraum (30) mit einer Seitenwand (33), einer ersten Endfläche (31) und einer zweiten Endfläche (32) zu bilden;
- einem ersten vergrößerten Teil (21) an einem ersten Ende des Körpers (20), wobei der erste vergrößerte Teil (21) einen ersten unteren Anschlag (23) und einen ersten oberen Anschlag (25) definiert;
- einem zweiten vergrößerten Teil (22) an einem zweiten Ende des Körpers (20), wobei der zweite vergrößerte Teil (22) einen zweiten unteren Anschlag (24) und einen zweiten oberen Anschlag (26) definiert;
- mindestens einem Kolben (40) mit einer vorderen Oberfläche (41) und einer Stange (42), wobei der Kolben (40) innerhalb des axialen Hohlraums (30) aufgenommen ist, um so innerhalb des axialen Hohlraums (30) eine Kammer (50) zu definieren, die geeignet ist, mit Druck beaufschlagt zu werden und die Stange (42) in Kontakt mit einer Endfläche (31, 32) des axialen Hohlraums (30) zu bringen; und
- Mittel (52) zum Einleiten und Hinausleiten einer Druckflüssigkeit in/aus dem Inneren der Kammer (50).

2. Vorrichtung (100) nach Anspruch 1, wobei der axiale Hohlraum (30) eine zylindrische Form aufweist und der wenigstens eine Kolben (40) eine Form hat, die an die des axialen Hohlraums (30) angepasst ist und Dichtungen und elastische Ringe (43) aufweist, die geeignet sind, eine wirkungsvolle Flüssigkeitsdichtheit zwischen dem Kolben (40) und der Seitenwand (33) des axialen Hohlraums (30) zu erreichen.

3. Vorrichtung (100) nach einem der vorhergehenden Ansprüche, welche zwei Kolben (40) aufweist, die einander gegenüberliegend angeordnet sind.

4. Vorrichtung (100) nach einem der vorhergehenden Ansprüche, wobei die ersten Anschläge (23, 25) in einer einzigen Ebene T im Wesentlichen senkrecht zu der Achse x des Köpers (20) liegen und die zweiten Anschläge (24, 26) in einer einzigen Ebene π im Wesentlichen parallel zu T und senkrecht zur Achse x des Körpers (20) liegen.

5. Vorrichtung (100) nach einem der Ansprüche 1 bis 3, wobei der erste obere Anschlag (25) und der zweite untere Anschlag (24) einen Winkel α zur Ebene π senkrecht zur Achse x des Körpers (20) bilden, während der erste untere Anschlag (23) und der zweite obere Anschlag (26) einen Winkel - α zur Ebene π bilden.

6. Vorrichtung (100) nach einem der vorhergehenden Ansprüche, wobei die Mittel (52) zur Einleitung und Entfernung einer Druckflüssigkeit in/aus der Kammer (50) eine Hilfskammer (54) aufweisen, deren Volumen durch Betätigung einer Schraube (56) veränderbar ist, wobei die Schraube (56) in die Hilfskammer (54) bewegt werden kann.

7. Vorrichtung (100) nach einem der Ansprüche 1 bis 5, wobei die Mittel (52) zur Einleitung/Entfernung einer Druckflüssigkeit einen Kanal aufweisen, der die Kammer (50) mit außen verbindet und ein Ventil, das das Öffnen und Schließen des Kanals verursacht, wobei das Ventil von dem Typ ist, welches eine schnelle Kopplung mit dem Druckflüssigkeitskreis eines bekannten Typs erlaubt.

8. Vorrichtung (100) nach einem der vorhergehenden Ansprüche, mit einer integralen Struktur, in welcher der Körper (20) und die vergrößerten Teile (21, 22) einstückig ausgebildet sind.

9. Vorrichtung (100) nach einem der Ansprüche 1 bis 7, mit einer Komposit- Struktur, d. h. eine Struktur, in welcher die vergrößerten Teile (21, 22) axial zum Körper (20) bewegbar sind.

10. Baugruppe (110) mit einer Vorrichtung (100) nach einem der vorhergehenden Ansprüche, wobei ein erstes längliches Teil (101) und ein zweites längliches Teil (102) eine gemeinsame Achse X aufweisen, wobei:
- die Achse x mit der Achse X zusammenfällt;
- eine Halbausnehmung (121), die zum Einführen des ersten vergrößerten Teils (21) mit großem Axialspiel geeignet ist, in dem ersten länglichen Teil (101) geformt ist, wobei die Halbausnehmung (121) eine erste untere Kontaktfläche (123) definiert sowie eine erste obere Kontaktfläche (125), welche in Kontakt mit dem ersten unteren Anschlag (23) beziehungsweise mit dem ersten oberen Anschlag (25) kommen kann; und
- eine Halbausnehmung (122), geeignet zum Einführen des zweiten vergrößerten Teils (22) mit großem axialen Spiel, im zweiten länglichen Teil (102) geformt ist, wobei die Halbausnehmung (122) eine zweite untere Kontaktfläche (124) sowie eine zweite obere Kontaktfläche (126) definiert, die in Kontakt mit dem zweiten unteren Anschlag (24) beziehungsweise mit dem zweiten oberen Anschlag (26) in Kontakt kommen soll.

11. Baugruppe (110) nach dem vorhergehenden Anspruch, wobei die ersten Kontaktflächen (123, 125) in einer einzigen Ebene σ im Wesentlichen senkrecht zur Achse X liegen und die zweiten Kontaktflächen (124, 126) in einer einzigen Ebene ρ im Wesentlichen parallel zu σ und senkrecht zur Achse X liegen.

12. Baugruppe (110) nach Anspruch 10, wobei die erste obere Kontaktfläche (125) und die zweite untere Kontaktfläche (124) einen Winkel α zur Ebene ρ senkrecht zur Achse X formen, während die erste untere Kontaktfläche (123) und die zweite obere Kontaktfläche (126) einen Winkel - α zu ρ bilden.

13. Baugruppe (110) nach Anspruch 10, wobei die beiden Halbausnehmungen (121, 122) die unmittelbar nebeneinander angeordnet sind, eine einzige Ausnehmung (200) bilden, die eine Gesamtform ähnlich zu der der Vorrichtung (100) bilden, und wobei die Vorrichtung (100) in die Ausnehmung (200) allein durch die Einleitung von Druckflüssigkeit in die Kammer (50) eingeführt sein kann.

14. Baugruppe (110) nach Anspruch 11, mit einer Vorrichtung (11) nach Anspruch 4, wobei:
- die beiden Ebenen π und T im Abstand d angeordnet sind;
- die beiden Ebenen ρ und σ im Abstand D angeordnet sind; und
- wenn innerhalb der Kammer (50) keine Druckflüssigkeit vorhanden ist, D etwas größer als d ist.

15. Verfahren zur Stoßverbindung eines ersten länglichen Teils (101) und eines zweiten länglichen Teils (102) mit einer gemeinsamen Achse X mit den Verfahrensschritten:
- Vorsehen einer Vorrichtung (100) nach Anspruch 1;
- Vorsehen einer Halbausnehmung (121) im ersten länglichen Teil (101), die geeignet ist, den ersten vergrößerten Teil (21) der Vorrichtung (100) aufzunehmen und zum Definieren einer ersten unteren Kontaktfläche (123) und einer ersten oberen Kontaktfläche (125), die dafür vorgesehen sind, in Kontakt mit dem ersten unteren Anschlag (23) beziehungsweise mit dem ersten oberen Anschlag (25) zu kommen und zwar definiert durch den zweiten vergrößerten Teil (21);
- Vorsehen einer Halbausnehmung (122) im zweiten länglichen Teil (102), die geeignet ist, den zweiten vergrößerten Teil (22) der Vorrichtung (100) aufzunehmen und zum Definieren einer zweiten unteren Kontaktfläche (124) und einer zweiten oberen Kontaktfläche (126), die vorgesehen sind, in Kontakt mit dem zweiten unteren Anschlag (24) beziehungsweise mit dem zweiten oberen Anschlag (26) zu gelangen;
- Anordnung der beiden länglichen Teile (101, 102) so gegeneinander, dass sie eine gemeinsame Achse X aufweisen und somit die beiden Halbausnehmungen (121, 122) eine einzige Ausnehmung (200) bilden;
- Einleitung von Druckflüssigkeit in die Kammer (50) der Vorrichtung (100);
- Einführen der Vorrichtung (100) in die Ausnehmung (200);
- Reduzierung des Drucks innerhalb der Kammer (50).

16. Verfahren nach dem vorhergehenden Anspruch, wobei:
- der Verfahrensschritt, eine Vorrichtung (100) nach Anspruch 1 vorzusehen, den Verfahrensschritt, eine Vorrichtung (100) gemäß Anspruch 9 vorzusehen, beinhaltet; und darüber hinaus
- nach dem Verfahrensschritt des Einführens der Vorrichtung (100) in die Ausnehmung (200) den Verfahrensschritt der Justierung des Abstandes d zwischen den ersten Anschlägen (23, 25) und den zweiten Anschlägen (24, 26) beinhaltet, so dass er im Wesentlichen gleich dem Abstand D zwischen den ersten Kontaktflächen (123, 125) und den zweiten Kontaktflächen (124, 126) ist.

## Revendications

1. Dispositif (100) pour assembler bout à bout deux parties longues (101 et 102) ayant un axe X commun, comprenant :
un corps (20) qui s'étend le long d'un axe x ; le corps (20) étant creux afin de définir une cavité axiale (30) ayant une paroi latérale (33), une première face d'extrémité (31) et une seconde face d'extrémité (32) ;
une première partie agrandie (21) située au niveau d'une première extrémité du corps (20), la première partie agrandie (21) définissant un premier aboutement inférieur (23) et un premier aboutement supérieur (25) ;
une seconde partie agrandie (22) située au niveau d'une seconde extrémité du corps (20), la seconde partie agrandie (22) définissant un second aboutement inférieur (24) et un second aboutement supérieur (26) ;
au moins un piston (40) comprenant une surface avant (41) et une tige (42), le piston (40) étant logé à l'intérieur de la cavité axiale (30) afin de définir, à l'intérieur de la cavité axiale (30), une chambre (50) appropriée pour être mise sous pression et la tige (42) établissant le contact contre une face d'extrémité (31, 32) de la cavité axiale (30) ; et
des moyens (52) pour introduire/retirer un fluide sous pression dans/de l'intérieur de la chambre (50).

2. Dispositif (100) selon la revendication 1, dans lequel la cavité axiale (30) a une forme cylindre et le au moins un piston (40) a une forme correspondant à celle de la cavité axiale (30) et comprend des joints d'étanchéité et des bagues élastiques (43) pouvant obtenir un joint d'étanchéité étanche au fluide effectif entre le piston (40) et la paroi latérale (33) de la cavité axiale (30).

3. Dispositif (100) selon l'une quelconque des revendications précédentes, comprenant deux pistons (40) agencés à l'opposé l'un de l'autre.

4. Dispositif (100) selon l'une quelconque des revendications précédentes, dans lequel les premiers aboutements (23, 25) sont dans un plan unique τ sensiblement perpendiculaire à l'axe x du corps (20) et les seconds aboutements (24, 26) sont dans un plan unique π sensiblement parallèle à τ et perpendiculaire à l'axe x du corps (20).

5. Dispositif (100) selon l'une quelconque des revendications 1 à 3, dans lequel le premier aboutement supérieur (25) et le second aboutement inférieur (24) forment un angle α par rapport au plan π perpendiculaire à l'axe x du corps (20), alors que le premier aboutement inférieur (23) et le second aboutement supérieur (26) forment un angle -α par rapport au plan π.

6. Dispositif (100) selon l'une quelconque des revendications précédentes, dans lequel les moyens (52) pour introduire/retirer un fluide sous pression dans/de la chambre (50) comprennent une chambre auxiliaire (54) dont le volume peut être modifié en actionnant une vis (56) pouvant se déplacer à l'intérieur de la chambre auxiliaire (54).

7. Dispositif (100) selon l'une quelconque des revendications 1 à 5, dans lequel les moyens (52) pour introduire/retirer un fluide sous pression comprennent un canal qui raccorde la chambre (50) avec l'extérieur et une valve qui provoque l'ouverture et la fermeture du canal, la valve étant du type qui permet le couplage rapide avec un circuit de fluide sous pression de type connu.

8. Dispositif (100) selon l'une quelconque des revendications précédentes, ayant une structure solidaire dans laquelle le corps (20) et les parties agrandies (21, 22) sont réalisés d'un seul tenant.

9. Dispositif (100) selon l'une quelconque des revendications 1 à 7, ayant une structure composite, c'est-à-dire une structure dans laquelle les parties agrandies (21, 22) sont axialement mobiles par rapport au corps (20).

10. Ensemble (110) comprenant un dispositif (100) selon l'une quelconque des revendications précédentes, une première partie longue (101) et une seconde partie longue (102) ayant un axe x commun, dans lequel :
l'axe x coïncide avec l'axe X ;
un demi-évidemment (121) approprié pour insérer la première partie agrandie (21) avec un large jeu axial est formé dans la première partie longue (101), le demi-évidemment (121) définissant une première surface de contact inférieure (123) et une première surface de contact supérieure (125) prévues pour venir en contact avec le premier aboutement inférieur (23) et avec le premier aboutement supérieur (25), respectivement ; et
un demi-évidemment (122) approprié pour insérer la seconde partie agrandie (22) avec un large jeu axial est formé dans la seconde partie longue (102), le demi-évidemment (122) définissant une seconde surface de contact inférieure (124) et une seconde surface de contact supérieure (126) prévues pour venir en contact avec le second aboutement inférieur (24) et avec le second aboutement supérieur (26), respectivement.

11. Ensemble (110) selon la revendication précédente, dans lequel les premières surfaces de contact (123, 125) sont dans un plan unique σ sensiblement perpendiculaire à l'axe X et les secondes surfaces de contact (124, 126) sont dans un plan unique ρ sensiblement parallèle à σ et perpendiculaire à l'axe X.

12. Ensemble (110) selon la revendication 10, dans lequel la première surface de contact supérieure (125) et la seconde surface de contact inférieure (124) forment un angle α par rapport au plan ρ perpendiculaire à l'axe X, alors que la première surface de contact inférieure (123) et la seconde surface de contact supérieure (126) forment un angle -α par rapport à ρ.

13. Ensemble (110) selon la revendication 10, dans lequel les deux demi-évidements (121, 122) agencés l'un à côté de l'autre forment un seul évidemment (200) ayant une forme globale similaire à celle du dispositif (100) et dans lequel le dispositif (100) peut être inséré à l'intérieur de l'évidemment (200) uniquement par l'introduction du fluide sous pression à l'intérieur de la chambre (50).

14. Ensemble (110) selon la revendication 11, comprenant un dispositif (11) selon la revendication 4, dans lequel :
les deux plans π et τ sont situés à une distance d ;
les deux plans ρ et σ sont situés à une distance D ; et
lorsqu'il n'y a pas de fluide sous pression à l'intérieur de la chambre (50), D est légèrement supérieure à d.

15. Procédé pour assembler bout à bout une première partie longue (101) et une seconde partie longue (102) ayant un axe X commun, comprenant les étapes consistant à :
prévoir un dispositif (100) selon la revendication 1,
prévoir, dans la première partie longue (101), un demi-évidemment (121) approprié pour contenir la première partie agrandie (21) du dispositif (100) et pour définir une première surface de contact inférieure (123) et une première surface de contact supérieure (125) prévues pour venir en contact avec le premier aboutement inférieur (23) et avec le premier aboutement supérieur (25) respectivement, définis par la seconde partie agrandie (21) ;
prévoir, dans la seconde partie longue (102), un demi-évidemment (122) approprié pour contenir la seconde partie agrandie (22) du dispositif (100) et pour définir une seconde surface de contact inférieure (124) et une seconde surface de contact supérieure (126) prévue pour venir en contact avec le second aboutement inférieur (24) et avec le second aboutement supérieur (26) respectivement ;
agencer les deux parties longues (101, 102) bout à bout de sorte qu'elles ont un axe X commun et de sorte que les deux demi-évidements (121, 122) forment un évidemment (200) unique ;
introduire du fluide sous pression à l'intérieur de chambre (50) du dispositif (100) ;
insérer le dispositif (100) à l'intérieur de l'évidemment (200) ;
réduire la pression à l'intérieur de la chambre (50).

16. Procédé selon la revendication précédente, dans lequel :
l'étape consistant à prévoir un dispositif (100) selon la revendication 1, comprend l'étape consistant à prévoir un dispositif (100) selon la revendication 9 ; et
comprend également, après l'étape consistant à insérer le dispositif (100) à l'intérieur de l'évidemment (200), l'étape consistant à ajuster la distance d entre les premiers aboutements (23, 25) et les seconds aboutements (24, 26) de sorte qu'elle est sensiblement égale à la distance D entre les premières surfaces de contact (123, 125) et les secondes surfaces de contact (124, 126).
